# EUROPEAN PATENT SPECIFICATION

(11) **EP 3 141 090 B1**
(45) Date of publication and mention of the grant of the patent: **22.07.2020**
(21) Application number: 15724886.5
(22) Date of filing: 11.05.2015
(51) Int. Cl.: H05H 1/34, B23K 9/095, B23K 9/10, B23K 10/02

(54) **REPLACEABLE CONSUMABLE CARTRIDGE FOR A PLASMA ARC CUTTING SYSTEM**
ERSETZBARE VERSCHLEISSKARTUSCHE FÜR LICHTBOGENPLASMASCHNEIDSYSTEM
CARTOUCHE CONSOMMABLE REMPLACABLE POUR UN SYSTÈME DE DÉCOUPE PLASMA ARC

(30) Priority: 09.05.2014 US 201461991114 P; 12.08.2014 US 201462036393 P; 19.09.2014 WO PCT/US2014/056546
(43) Date of publication of application: 15.03.2017
(73) Proprietor: Hypertherm, Inc., Hanover, NH 03755 (US)
(72) Inventor: SHIPULSKI, E., Michael, Etna, NH 03750 (US); TWAROG, Peter, J., Meriden, NH 03770 (US); SANDERS, Nicholas, A., Enfield, NH 03748 (US); ZHANG, Yu, Hanover, NH 03755 (US)
(74) Representative: Barker Brettell LLP
(86) International application number: PCT/US2015/030134
(87) International publication number: WO 2015/172140

(56) References cited:
- WO-A1-2013/103466
- US-A1- 2012 012 565
- US-A1- 2012 181 257
- US-A1- 2013 043 224

## Description

### FIELD OF THE INVENTION

The invention relates generally to the field of plasma arc cutting systems and processes. More specifically, the invention relates to a replaceable cartridge body according to the preamble of claim 1 (see for example US 2012/199563 A1), for simplifying, optimizing and decreasing the time and cost of cutting through the use of improved consumable cartridges.

### BACKGROUND

Plasma arc torches are widely used in the cutting and marking of materials. A plasma torch generally includes an arc emitter (e.g., an electrode), an arc constrictor or constricting member (e.g., a nozzle) having a central exit orifice mounted within a torch body, electrical connections, passages for cooling, and passages for arc control fluids (e.g., plasma gas). The torch produces a constricted ionized jet of a gas with high temperature and high momentum. Gases used in the torch can be non-reactive (e.g., argon or nitrogen) or reactive (e.g., oxygen or air). During operation, a pilot arc is first generated between the arc emitter (cathode) and the arc constrictor (anode). Generation of the pilot arc can be by means of a high frequency, high voltage signal coupled to a DC power supply and the torch or by means of any of a variety of contact starting methods.

Known consumables suffer from a host of drawbacks both before and during a cutting operation. Before a cutting operation, selecting and installing the correct set of consumables for a particular cutting task can be burdensome and time-consuming. During operation, current consumables encounter performance issues such as failing to effectively dissipate and conduct heat away from the torch and failing to maintain proper consumable alignment and spacing. Furthermore, current consumables include substantial amounts of expensive materials, such as Copper and/or Vespel™, which leads to significant manufacturing costs and inhibits their widespread commercialization, production and adoption. What is needed is a new and improved consumable platform that decreases manufacturing costs, increases system performance (e.g., heat conduction, component alignment, cut quality, consumable life, variability/versatility, etc.) and eases installation and use of consumables by end users.

### SUMMARY OF THE INVENTION

The present invention provides a cost effective cartridge design that reduces manufacturing costs, facilitate cartridge commercialization and production, improve installation and ease of use by end users, and increase system performance.

A replaceable cartridge for a plasma arc torch according to the present invention is defined in claim 1, comprising :
a replaceable cartridge body (100) having a first section (112A) and a second section (112B), the second section (112B) including an exit orifice of an arc constricting member that (124) forms a part of the second section (112B), the first and second sections joined at an interface to form a substantially hollow chamber, the interface providing a coupling force that secures the first and second sections together; an electrode (120) included within the substantially hollow chamber; and a contact start spring element (128), wherein the contact start spring element and at least a portion of the electrode are irremovably disposed within the substantially hollow chamber of the replaceable cartridge body, the spring element imparting (128) a separating force that biases the electrode (120) toward the second section (112B) of the plasma arc torch in a direction along an axis of the resilient element, the separating force having a magnitude that is less than a magnitude of the coupling force, wherein the contact start spring element (128) is integrated directly into the cartridge and is designed not to be separable or disassemblable from the cartridge.

portion external to the inner core). In some embodiments, a cartridge can be used on a handheld plasma cutting system and/or a mechanized plasma cutting system.

further embodiments of the present invention are defined in the dependent claims.

According to the present invention, the cartridge has a contact start spring element affixed to the electrode, integrated directly into the cartridge and designed not to be separable or disassemblable from the cartridge. The spring element can be in physical communication with the frame and/or can be configured to pass a pilot current from the frame to the arc emitter. The spring element biases the arc emitter in a direction along an axis of the spring element, by imparting a separating force according to the present invention, the separating force has a magnitude that is less than a magnitude of a coupling force holding the cartridge together.

### BRIEF DESCRIPTION OF THE DRAWINGS

The foregoing discussion will be understood more readily from the following detailed description of the invention when taken in conjunction with the accompanying drawings.
Figure 1 is a cross-sectional schematic illustration of a cartridge for a plasma arc cutting system, according to an illustrative embodiment of the invention.
Figure 2A is an isometric illustration of a unitary cartridge for a plasma arc cutting system, according to an illustrative embodiment of the invention.
Figure 2B is a cross-sectional illustration of a unitary cartridge for a plasma arc cutting system, according to an illustrative embodiment of the invention.
Figure 2C is a cross-sectional illustration of a unitary cartridge for a plasma arc cutting system, according to an illustrative embodiment of the invention.
Figure 3A is an isometric illustration of an inner cartridge assembly for a plasma arc torch, according to an illustrative embodiment of the invention.
Figure 3B is a cross-sectional illustration of an inner cartridge assembly for a plasma arc torch, according to an illustrative embodiment of the invention.
Figures 4A-4B are cross-sectional illustrations of consumable cartridges for a plasma arc cutting system, each cartridge having a nozzle, an electrode, a swirl ring, a resilient element and an end cap, according to illustrative embodiments of the invention.
Figure 5 is a cross-sectional illustration of a consumable cartridge for a plasma arc cutting system having a nozzle, an electrode, a swirl ring, a resilient element and an end cap, according to illustrative embodiments of the invention.

### DETAILED DESCRIPTION OF THE DRAWINGS

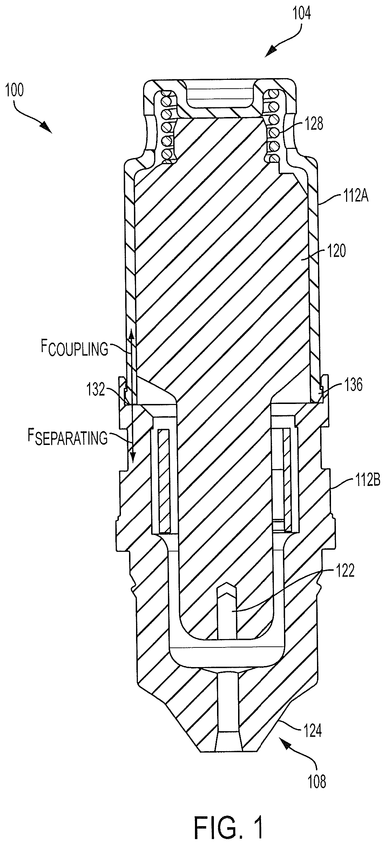

Figure 1 is a cross-sectional schematic illustration of a cartridge 100 for a plasma arc cutting system, according to an illustrative embodiment of the invention. The cartridge 100 has a first end 104, a second end 108, and a substantially hollow frame 112 having a first section 112A toward the first end 104 and a second section 112B toward the second end 108. The cartridge 100 also includes an arc emitter 120, an arc constrictor 124, and a resilient element 128. The arc emitter 120 is located within the frame 112 and is translatable relative to the frame 112. As shown, the arc constrictor 124 forms a part of the frame 112 (e.g., at the second end 108, but in some embodiments can be attached to the frame 112). The resilient element 128 is in physical communication with the frame 112, e.g., is in direct physical communication with the first section 112A. According to the present invention, the resilient member 128 is a contact start spring element affixed to the arc emitter 120. The resilient element 128 can be configured to pass a pilot current from the frame 112 to the arc emitter 120. The resilient element 128 can bias the arc emitter 120 toward one of the first end 104 or the second end 108 to facilitate ignition at or near the arc emitter 120. The arc emitter 120 is, according to the present invention, an electrode and can include a highly emissive element 122 such as a hafnium insert.

The first section 112A and second section 112B are joined at an interface 132 to form a substantially hollow chamber. The interface 132 provides a coupling force (F_{coupling}) that secures the first section 112A and the second section 112B together. The resilient member 128 imparts, according to the present invention, a separating force (F_{separating}) that biases the arc emitter 120 toward at least one of the first section 112A or the second section 112B. The separating force has, according to the present invention, a magnitude that is less than a magnitude of the coupling force. In some embodiments, the coupling force is provided at the interface 132 by at least one of a static frictional force, an adhesive force, or a normal force (e.g., a force countering a downward gravitational force) provided at a notch 136 of the interface 132. In some embodiments, the coupling force is stronger than is possible for a person to overcome by hand, either intentionally or inadvertently.

In some embodiments, the frame 112 includes at least one of a metal (e.g., aluminum) or other thermally conductive material. In some embodiments, the frame 112 is formed by molding. In some embodiments, the frame 112 is anodized (e.g., includes anodized aluminum, as set forth more fully below). In some embodiments, the frame 112 includes an electrical insulator, for example anodized aluminum and/or thermoplastics (e.g., PEEK, Torlon, Vespel, etc.). In some embodiments, at least one of the first end 104 or the second end 108 of the frame 112 includes a threaded region shaped to engage a complementary component. In some embodiments, the electrode 120 includes the resilient element 128 such as a spring.

In some embodiments, an external surface of the cartridge 100 is shaped to connect to, or mate with, a retaining cap or a cartridge cap (not shown). In some embodiments, the retaining cap is replaceable, threaded, and/or snap-on. The cartridge cap can be disposed about (e.g., can surround) the second end 108 of the frame 112. The cartridge cap can be shaped to contact the arc emitter 120 and to retain the arc emitter 120 within the frame 112. The cartridge cap can define an aperture of the arc emitter 120. The cartridge cap can include a fluid sealing surface disposed about a circumference of the aperture of the arc emitter 120. In some embodiments, the cartridge cap substantially orients the electrode 120 and retains the electrode 120 within the cartridge 100. In some embodiments, the cartridge cap includes a seal.

The cartridge 100 can be a "consumable" cartridge or assembly of consumable components, e.g., the cartridge 100 can be replaced as a unit after it reaches the end of its useful life. The cartridge 100 can be a sealed unit that is not intended to have individual component parts replaced. According to the present invention, individual components are irremovably disposed within or integrated into the cartridge 100. According to the present invention, at least a portion of the electrode 120 and the contact start spring element 128 are irremovably disposed within the frame 112, e.g., sealed within the frame 112 and/or not intended to be removed or replaced by an operator. In some embodiments, the cartridge 100 is a consumable component. In some embodiments, the components (e.g., frame 112 and arc constrictor 124) may be connected via press fits or other like means with tight tolerances and will degrade, fracture, or fail if separated.

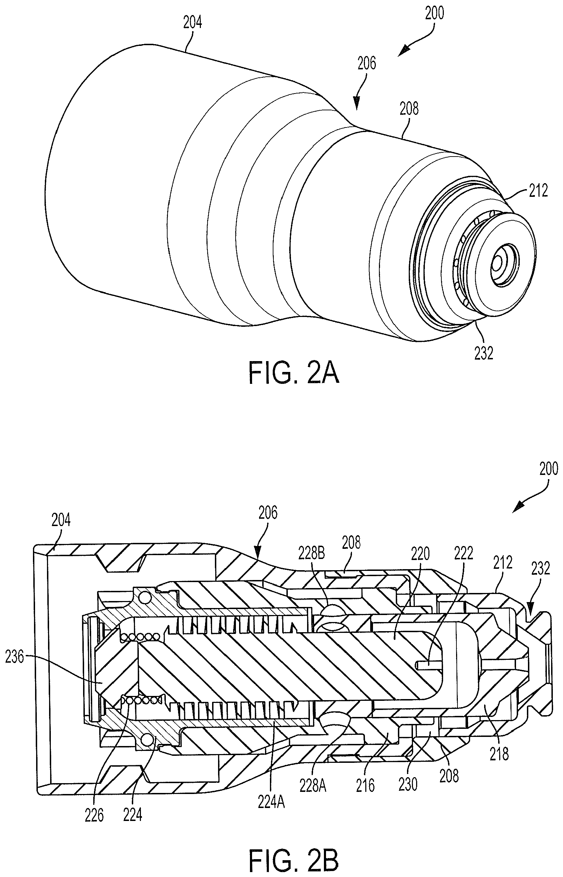

Figure 2A is an isometric illustration of a unitary cartridge 200 for a plasma arc cutting system, according to an illustrative embodiment of the invention. Visible from the exterior are a plastic exterior section 204, a metallic exterior section 208, and a copper exterior section 212 (e.g., a nozzle shield). The plastic exterior section 204 and the metallic exterior section 208 are joined at a junction 206. In some embodiments, the junction 206 is included in or near a tapered region. In some embodiments, the plastic exterior section 204 is a retaining cap. In some embodiments, the metallic exterior section 208 is a shield insulator. In some embodiments, the metallic exterior section 208 is formed substantially of a material other than copper. In some embodiments, the copper exterior section 212 is formed of a pure or substantially pure copper or copper alloy. The components of the cartridge 200 are seen in more detail in Figure 2B, described below.

Figure 2B is a cross-sectional illustration of a unitary cartridge 200 for a plasma arc cutting system, according to an illustrative embodiment of the invention. In this view, additional elements of the cartridge 200 are visible, including a nozzle body 216, a nozzle orifice 218, an electrode 220 having an emitting element 222, an insulator sleeve 224 having an elongated portion 224A, a resilient element 226, and an electrode contact button 236 (e.g., made of brass). In the present invention, one or more of these elements can be redesigned to achieve one or more of the objectives set forth above.

For example, the nozzle body 216 can be formed from a conductive material (e.g., a highly conductive material such as aluminum) and can be attached to (e.g., can be in direct physical contact with) other parts of the cartridge 200. In some embodiments, the nozzle body 216 is in thermal communication with certain parts of the cartridge 200 (e.g., via thermal conduction) but electrically isolated from other parts. For example, the nozzle body 216 can function as a heat sink for the nozzle orifice 218 while remaining electrically isolated from the nozzle shield 212. Such a configuration can enhance cooling performance (for example, of the nozzle and the electrode) and reduce manufacturing costs by comparison to previously used materials (e.g., as Vespel™). In some embodiments, the cartridge has a region with a thermal conductivity of between about 200-400 Watts per meter per degree Kelvin (for example, aluminum may have a thermal conductivity of between 200-250 W/m-°K, while copper may have a thermal conductivity of between 350-400 W/m-°K). In some embodiments, the consumable cartridge has a heat capacity to current ratio of 2-4 W/m-°K-A.

In addition, the nozzle body 216 includes a set of inlet swirl holes 228 (e.g., swirl holes 228A and 228B). In some embodiments, the set of inlet swirl holes 228 includes five swirl holes, or optionally between three and ten swirl holes. The swirl holes 228 can be radially offset to impart a swirl flow (e.g., radial and tangential velocity components) to gases flowing therethrough (e.g., a shield gas, plasma gas, and/or a plenum gas). In this configuration, the nozzle body 216 provides the swirl function previously provided by a swirl ring, thus eliminating the need for a traditional swirl ring. In addition, in some embodiments the nozzle body 216 is formed via a molding process, thus eliminating the need for expensive and time-consuming drilling procedures to create the swirl holes. In some embodiments, the nozzle shield 212 includes an angle 232 that helps redirects fluid flow away from the plasma arc during operation.

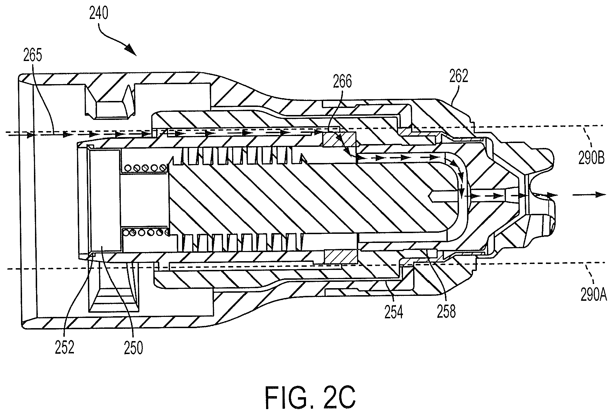

Figure 2C is a cross-sectional illustration of a unitary cartridge 240 for a plasma arc cutting system, according to an illustrative embodiment of the invention. The unitary cartridge 240 can be similar in many respects to the cartridge 200 shown in Figure 2B but can differ in certain other respects. For example, the cartridge 240 utilizes a stamped torch interface 250 (e.g., a stamped pieces of copper) having a cross-sectional "T"-shape. The interface 250 can allow the electrode to slide more freely than in the Figure 2B configuration, which uses an electrode with a nipple feature that forms a mating surface with the spring. In Figure 2C, the cap and the nozzle body have been opened to ease manufacture and allow the electrode to slide freely into the nozzle body during cartridge assembly. The spring can then rest on the electrode, and the stamped torch interface 250 can use a small tab feature 252 to snap readily into the nozzle body, securing the electrode therein. Such a configuration avoids the need to press fit multiple pieces together (and, in turn, avoids the need to have to achieve tight tolerances between pieces) and/or the need to assemble different pieces of the torch from different directions. Using the cartridge 240, a manufacturer can simply slide the electrode into place in one step.

In addition, the cartridge 240 uses a molded, slotted swirl feature 266 to achieve the swirling function instead of using holes drilled in the nozzle body. In this configuration, during operation gas flows out of the slots 266 and into the plasma chamber to form the swirl gas about the plasma arc. During operation, gas may also flow through molded gas shield channel 254, further cooling the nozzle body. Slots 266 form a set of swirl holes once the nozzle body, nozzle orifice, and/or nozzle liner are connected. Gas delivered to the slots is conveyed from the torch through a chamber defined by an internal surface of the nozzle body and an external surface of the nozzle liner (which, in combination, form the swirl holes). Such a configuration eliminates post-process machining steps and the associated expenses. In addition, the cartridge 240 includes a radial swage connection 258 between the nozzle orifice and the nozzle body. The radial swage connection 258 provides a robust connection interface to allow contact to be maintained between the nozzle orifice and the nozzle body, but also exposes significant surface area for heat to be conducted from the nozzle orifice to the nozzle body. Finally, in this embodiment, the electrode sleeve is removed and replaced with a more traditional heat exchanger.

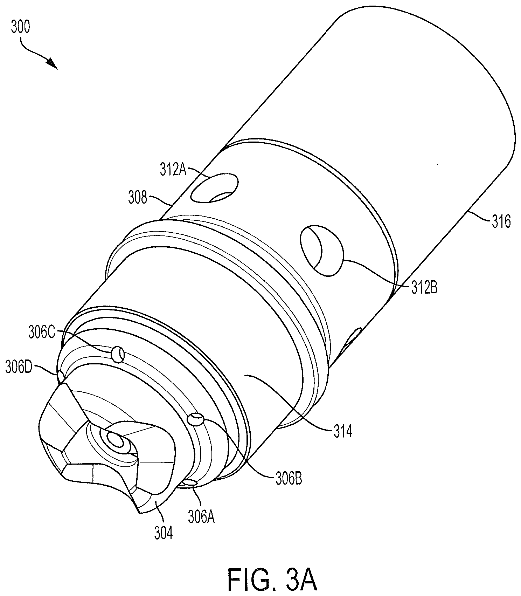

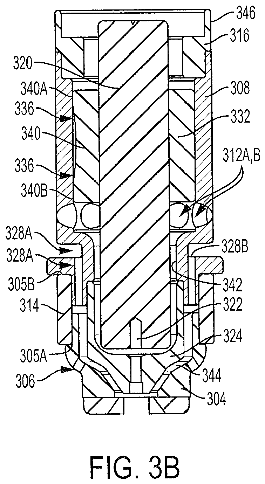

Figure 3A is an isometric illustration of an inner cartridge assembly 300 for a plasma arc torch, according to an illustrative embodiment of the invention. Visible from the exterior are a shield 304 having vent holes 306 (e.g., holes 306A-D as shown), a nozzle body 308 having flow holes or inlet swirl holes 312 (e.g., holes 312A, 312B as shown in figure 3A), a front insulator (or shield insulator) 314, and a rear insulator (or lock ring) 316. These and additional elements are described more fully in conjunction with the cross-sectional view shown in Figure 3B below.

Figure 3B is a cross-sectional illustration of the inner cartridge assembly 300 of Figure 3A, according to an illustrative embodiment of the invention. In this view, several additional components of the inner cartridge assembly 300 are visible, including an electrode 320 having an emitting element 322, an arc constrictor or nozzle orifice 324, shield flow holes 328 (e.g., flow holes 328A-B as shown) directed toward the nozzle orifice 324, an insulator sleeve 332, and a cooling gas flow channel 336. In this embodiment, the nozzle body 308 functions as the cartridge frame to which other parts attach.

A number of features of the inner cartridge assembly 300 can enhance its cooling capabilities. First, the nozzle body 308 can be made of aluminum, which can enhance heat conduction over previous materials and configurations as described above. Second, the nozzle orifice 324 can be made of copper and can be pressed onto the nozzle body 308. In such embodiments, the nozzle body 308 can serve as a heat sink for the copper nozzle orifice 324. Third, improved gas flow surfaces, can assist in cooling, e.g., with shield gas flowing forward through holes 328A, 328B just outside of the press area. A press fit arrangement can also provide improved thermal conduction paths between torch parts as a result of tight tolerances between the surfaces of the parts. In some embodiments, the press fit arrangement includes an interference fit and/or a tabbed or interlocking fit having one or more step-like features. In addition, the small size of the press fit design has the additional advantages of reducing manufacturing and/or material costs and simplifying manufacture and assembly of the components (e.g., by having fewer parts).

The nozzle shield 304 can also be made of copper and can be pressed onto an anodized aluminum insulator 314 at a surface 305A. This assembly can then be pressed onto the nozzle body 308 at a press fit surface 305B. In such embodiments, the shield insulator 314 connects the nozzle body 308 to the shield 304. In some embodiments, the shield insulator 314 is press fit to the nozzle body 308. In some embodiments, the shield insulator 314 is an electrically insulative ring and/or includes a set of press-fit surfaces 305A, 305B that connect the shield 304 and the nozzle body 308. The shield insulator 314 can connect the nozzle body 308 to the shield 304 such that the nozzle body 308 and the shield 304 are electrically insulated from one another while still transferring thermal energy to one another. In some embodiments, using a two-piece shield insulator can increase (e.g., double) electrical insulation abilities as a result of increasing contact surfaces.

The nozzle shield 304 can be considerably smaller than previous shields, allowing for efficient manufacture and assembly of components, improved durability, and greater assurances of proper orientation of cartridge parts relative to one another. By way of example, for a 45-amp system, a prior art stock shield might have a diameter of about 25.4 mm (1 inch) and a mass of about 0.018 kg (0.04 pounds), whereas a cartridge shield in accordance with the current invention can have a diameter of about 12.7 mm (0.5 inches) with a mass of less than 0.0045 kg (0.01 pounds), e.g. about 0.0032 kg (0.007 pounds). For a 105-amp system, a prior art stock shield might have a diameter of about 25.4 mm (1 inch) with a mass of about 0.023 kg (0.05 pounds), whereas a cartridge shield in accordance with the current invention can have a diameter of about a 12.7 mm (half inch) with a mass of about 0.0045 kg (0.01 pounds), e.g. about 0.0059 kg (0.013 pounds).

The smaller size configuration can carry significant advantages. First, components having a reduced mass have a reduced heat capacity, which allows the components to be rapidly cooled during post-flow and/or allows more heat to be transferred to the cooling gas during operation. Second, a smaller shield can attain comparatively higher temperatures during operation and can transfer more heat to the cooling gas. In some embodiments, the nozzle shield 304 is exposed to a cold gas entering the shield area, e.g., via shield flow holes 328, which can further reduce the temperature. The flow holes 328 can each have a total cross sectional area of at least about one square inch.

In some embodiments, the electrode 320 includes a base made of copper. In some embodiments, the electrode 320 base has a small diameter with a pressed-on insulator sleeve 332 made of anodized aluminum and/or plastic used for electrical isolation. In some embodiments, a cooling gas flow channel or gap 336 exists between the insulator sleeve 332 and the nozzle body 308. In some embodiments, a cool gas flows in the gap 336. In some embodiments, a "dumbbell" configuration 340 defined by two end contacts 340A, 340B is used, which can reduce or minimize contact area between the nozzle body 308 and the insulator sleeve 332. Such a configuration can reduce friction between parts.

In some embodiments, the sleeve 332 contacts the electrode 320, which can be part of a separate current path from the nozzle body 308 and/or a different portion of the current path from the nozzle body 308. In some embodiments, the electrode 320 and the nozzle body 308 can be electrically separated by a gap to create the arc and/or to ensure proper orientation of the parts in the torch. In such embodiments, the nozzle 308 and the electrode 320 can be in physical contact between the sleeve 332 and the nozzle body 308. In such embodiments, insulative layers are needed in this region so that current is able to pass through the emitting element 322.

In some embodiments, a wall of the nozzle body 342 near which the electrode 320 moves can stay comparatively cool during operation as gas flow passes both on the inside of the nozzle body 308 and directly across an exterior surface 344 of the nozzle 324. The material choice (e.g., aluminum or another metal) for the nozzle body 342 design provides for a better conduction path and heat sink ability as compared with previous materials such as Vespel™. Such factors assist in cooling the electrode isolation piece and allow the electrode to function even after a deep pit is formed in the emitting element from electrode use.

In some embodiments, a lock ring 316 (or isolation ring) forms an interface 346 between the cartridge 300 and the torch. In some embodiments, the lock ring 316 can be made of anodized aluminum. The lock ring 316 can be pressed into the nozzle body to "trap" the moveable electrode 320. The lock ring 316 can contain the components within the cartridge 300 and electrically isolate the torch. In some embodiments, the lock ring 316 is replaced by heat shrinking or gluing. In some embodiments, the lock ring 316 is shaped to orient the cartridge 300 (e.g., axially), to optimize gas flow, to enable electrical connection to the cathode, and/or to provide electrical isolation.

In various embodiments described herein, the cartridges or consumable assemblies are about 88.9 mm (3.5 inches) in length and 27.94 mm (1.1 inches) in diameter. In some embodiments, the retaining cap is considered part of the torch, e.g., not a consumable component. In such configurations, machining steps can be minimized, with no machining necessary after assembly (as compared to some torch assemblies that require a final machining step to achieve functional axiality of the cartridge). In some embodiments, the reduction in swirl holes can minimize drilling operations compared to prior art swirl rings. In some embodiments, replacing Vespel™ with aluminum can significantly reduce manufacturing costs of the cartridge. In some embodiments, copper is used only in certain locations in the electrode, nozzle, and/or orifice, which can reduce manufacturing costs by reducing the use of this expensive material. For example, copper can be concentrated primarily in an inner core or region. While copper can be desirable for its thermal and electrical properties, it is also more expensive than other materials, and so designs that minimize its usage are sought.

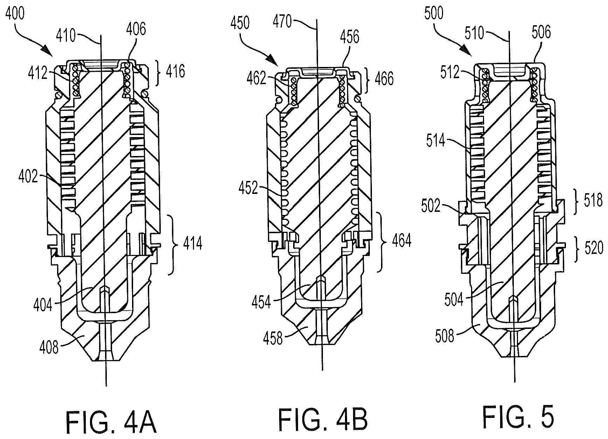

Figures 4A-4B and 5 are cross-sectional illustrations of consumable cartridges for a plasma arc cutting system, each cartridge having a nozzle, an electrode, a swirl ring, a resilient element and an end cap, according to illustrative embodiments of the invention. Figure 4A shows an exemplary cartridge design 400. As shown, the cartridge 400 includes a swirl ring 402, an end cap 406, a nozzle 408 and an electrode 404. The electrode 404 can be a spring-forward electrode for a contact start plasma arc torch, where a resilient element 412 (e.g., a spring) exerts a separating force on the distal end of the electrode 404 to bias the electrode 404 away from the end cap 406 and toward the nozzle 408. The resilient element 412 can also be a part of the cartridge 400. The cartridge 400 can include a starting mechanism for contact starting a plasma arc torch upon assembly into the torch.

The swirl ring 402 can extend substantially over the length of the electrode 404 along a longitudinal axis 410 of the electrode 404. In some embodiments, the swirl ring 402 is manufactured through injection molding of high-temperature thermoplastics (e.g., PAI, PEI, PTFE, PEEK, PEKPEKK, etc). Use of thermoplastics to manufacture swirl rings can reduce cartridge cost in comparison to Vespel™, which is a material that has been used to manufacture swirl rings, but is comparatively more expensive. It is known that thermoplastics have operating temperatures that are lower than Vespel™ (a thermoset), which can impact the integrity of swirl rings and electrode life. However, the cartridge designs of the present technology, which can incorporate swirl rings made from thermoplastics resins having various fortifying additives that provide the desired thermal resistance and/or thermal conductivity (e.g., glass fibers, minerals, boron nitride (BN), and/or Cubic BN), have resolved the high temperature performance issues, thus enabling the effective use of thermoplastics in these cartridges. This is achieved since (1) thermoplastics have a sufficently high-temperature resistance and (2) a cartridge design that properly incorporates thermoplastics can avoid exposure of the thermoplastics to excessive temperatures during operation. In addition, when an electrode experiences an end-of-life event, which is also the end of life of the cartridge, the simultaneous melting of the plastic material is not problematic.

The end cap 406 can be made of a conductive material, such as copper. The end cap 406 can be inexpensively formed via stamping from a material blank and can be irremoveably inserted, press fit or over molded onto the cartridge 400. The end cap 406 is configured to contain the resilient element 412 within the cartridge 400 and compress the resilient element 412 against the distal end of the electrode 404 such that the resilient element 412 exerts a separating force on the distal end of the electrode 404 to bias the electrode 404 toward the nozzle 408. In some embodiments, end cap 406 may be shaped to matingly engage a patterned torch head and/or may include a set of fluid flow holes formed therethrough.

In some embodiments, an unreleasable snap-fit interface 414 is formed between the swirl ring 402 and the nozzle 408 to join the two consumable components together as a part of the cartridge 400. In addition, a second snap-fit interface 416 can be formed between the swirl ring 402 and the end cap 406 to join the two consumable components together as a part of the cartridge 400. Other manufacturing and assembly options are available and viable. For example, the swirl ring 402 can be over-molded onto the end cap 406. The end cap 406 can also be capsulated by the swirl ring 402 and the resilient element 412 (e.g., a spring), where the end cap 406 can move within the cartridge 400.

Figure 4B shows another exemplary cartridge design 450. As shown, the cartridge 450 includes a swirl ring 452, an end cap 456, a nozzle 458 and an electrode 454. In some embodiments, the cartridge 450 also includes a resilient element 462 that functions similarly as the resilient element 412 of FIG. 4A. The cartridges of Figures 4A and 4B have different electrodes (e.g., different sizes of heat exchanger flanges, circumferential flange for uniform flow), different nozzles (e.g., different swirl ring attachment), and different swirl rings (e.g., different swirl holes and attachment). In the cartridge design 450 of Figure 4B, an interface 464 is formed as the swirl ring 452 is inserted into position in relation to the nozzle 458. Another interface 466 can be formed between the swirl ring 452 and the end cap 456.

Figure 5 shows another exemplary cartridge design 500. As shown, the cartridge 500 includes a swirl ring 502, a sleeve 514, an end cap 506, a nozzle 508 and an electrode 504. In some embodiments, the cartridge 500 also includes a resilient element 512 that functions similarly as the resilient element 512 of Figure 4A. The sleeve 514 and/or end cap 506 can be made from a conductive material (e.g., copper) using a stamping method. The sleeve 514 can be press fit or over molded onto the cartridge 500. The end cap 506 can be a part of the sleeve 514. Therefore, the sleeve 514 and the end cap 506 can be constructed as a single component piece.

As shown, the swirl ring 502 can be relatively short in comparison to the swirl ring 402 such that the swirl ring 502 only extends along a portion of the length of the electrode 504 in the longitudinal axis 510. Similar to the swirl ring 402, the swirl ring 502 can be manufactured through injection molding of high-temperature thermoplastics (e.g., Torlon™). A snap-fit interface 520 can be formed between the swirl ring 502 and the nozzle 508 to join the two consumable components together as a part of the cartridge 500. Another snap-fit interface 518 can be formed between the swirl ring 502 and the sleeve 514 to join the two consumable components together as a part of the cartridge 500. Alternatively, the swirl ring 502 can be over-molded onto the sleeve 514.

There are many benefits associated with using a cartridge in a plasma arc torch. First, such a design promotes ease of use through quick change capabilities, short setup time and ease of consumable selection for an end user. It also provides consistent cut performance because a suite of consumables are changed at once when the cartridge is changed. In contrast, variation in performance is introduced when components are changed individually at different times. For example, long term re-use of the same swirl ring can cause dimensional alteration after each blow-out, thereby altering the performance quality even if all other components are changed regularly. In addition, since the manufacturing and/or installation cost of a cartridge is lower than the combined cost of a set of consumables, there is a lower cost associated with per cartridge change than per change of a set of consumables. Furthermore, different cartridges can be designed to optimize torch operation with respect to different applications, such as marking, cutting, maintaining long life, etc.

While the invention has been particularly shown and described with reference to specific preferred embodiments, it should be understood by those skilled in the art that various changes in form and detail may be made therein without departing from the scope of the invention as defined by the following claims.

## Claims

1. A replaceable cartridge for a plasma arc torch, the replaceable cartridge comprising:
a replaceable cartridge body (100)
and being **characterised by**
the replaceable cartridge body (100) having a first section (112A) and a second section (112B), the second section (112B) including an exit orifice of an arc constricting member (124) that forms a part of the second section (112B), the first and second sections (112A, 112B) joined at an interface to form a substantially hollow chamber, the interface providing a coupling force that secures the first and second sections (112A, 112B) together;
an electrode (120) included within the substantially hollow chamber; and
a contact start spring element (128) affixed to the electrode (120), wherein the contact start spring element (128) and at least a portion of the electrode (120) are irremovably disposed within the substantially hollow chamber of the replaceable cartridge body (100), the spring element imparting (128) a separating force that biases the electrode (120) toward the second section (112B) of the replaceable cartridge body (100) in a direction along an axis of the contact start spring element (128), the separating force having a magnitude that is less than a magnitude of the coupling force,
wherein the contact start spring element (128) is integrated directly into the cartridge and is designed not to be separable or disassemblable from the cartridge.

2. The replaceable cartridge of claim 1 wherein a gas input is provided for moving the electrode (120) and overcomes the separating force.

3. The replaceable cartridge of claim 1 wherein a base of the arc constricting member (124) is anodized.

4. The replaceable cartridge of claim 1 wherein the cartridge has a region with a thermal conductivity of between about 200-400 Watts per meter per degree Kelvin, wherein optionally the shield has a heat capacity to current ratio of 2-4 W/m-°K-A.

5. The replaceable cartridge of claim 1 further comprising a cap insert connected to the second section (112B) of the cartridge body (100), the cap insert substantially orienting the electrode (120) and retaining the electrode (120) within the cartridge body (100).

## Patentansprüche

1. Austauschbare Patrone für einen Lichtbogenplasmabrenner, wobei die austauschbare Patrone Folgendes umfasst:
einen Hauptteil (100) der austauschbaren Patrone und
**dadurch gekennzeichnet, dass** der Hauptteil (100) der austauschbaren Patrone eine erste Sektion (112A) und
eine zweite Sektion (112B) aufweist, wobei die zweite Sektion (112B) eine Ausgangsöffnung eines Bogeneinschränkungsglieds (124) beinhaltet, das einen Teil der zweiten Sektion (112B) bildet, wobei die erste und die zweite Sektion (112A, 112B) an einer Schnittstelle zusammengefügt sind, um eine im Wesentlichen hohle Kammer zu bilden, wobei die Schnittstelle eine Kopplungskraft liefert, die die erste und die zweite Sektion (112A, 112B) zusammen besichert;
eine Elektrode (120), die innerhalb der im Wesentlichen hohlen Kammer enthalten ist; und
ein Kontaktstartfederelement (128), das an der Elektrode (120) befestigt ist, wobei das Kontaktstartfederelement (128) und mindestens ein Anteil der Elektrode (120) nichtentfernbar innerhalb der im Wesentlichen hohlen Kammer des Hauptteils (100) der austauschbaren Patrone angeordnet sind, wobei das Federelement (128) eine Trennkraft ausübt, die die Elektrode (120) gegenüber der zweiten Sektion (112B) des Hauptteils (100) der austauschbaren Patrone in einer Richtung entlang einer Achse des Kontaktstartfederelements (128) vorspannt, wobei die Trennkraft eine Stärke aufweist, die kleiner als eine Stärke der Kopplungskraft ist,
wobei das Kontaktstartfederelement (128) direkt in die Patrone integriert ist und dafür ausgelegt ist, von der Patrone nicht trennbar oder demontierbar zu sein.

2. Austauschbare Patrone nach Anspruch 1, wobei ein Gaseinlass zum Bewegen der Elektrode (120) vorgesehen ist und die Trennkraft überwindet.

3. Austauschbare Patrone nach Anspruch 1, wobei eine Basis des Bogeneinschränkungsglieds (124) anodisiert ist.

4. Austauschbare Patrone nach Anspruch 1, wobei die Patrone einen Bereich mit einer Wärmeleitfähigkeit von zwischen 200-400 Watt/Meter/(Grad Kelvin) aufweist, wobei der Schild ein Verhältnis der Wärmekapazität zum Strom von 2-4 W/ (m·°K·A) aufweist.

5. Austauschbare Patrone nach Anspruch 1, ferner umfassend einen Kappeneinsatz, der mit der zweiten Sektion (112B) des Patronenhauptteils (100) verbunden ist, wobei der Kappeneinsatz im Wesentlichen die Elektrode (120) orientiert und die Elektrode (120) innerhalb des Patronenhauptteils (100) zurückhält.

## Revendications

1. Cartouche remplaçable pour un chalumeau au plasma, la cartouche remplaçable comprenant :
un corps de cartouche remplaçable (100),
et étant **caractérisée en ce que**
le corps de cartouche remplaçable (100) a une première section (112A) et une deuxième section (112B), la deuxième section (112B) comportant un orifice de sortie d'un élément de rétrécissement d'arc (124) qui forme une partie de la deuxième section (112B), les première et deuxième sections (112A, 112B) étant reliées à une interface pour former une chambre sensiblement creuse, l'interface fournissant une force de couplage qui fixe les première et deuxième sections (112A, 112B) ensemble ;
une électrode (120) contenue dans la chambre sensiblement creuse ; et
un élément de déclenchement de contact à ressort (128) fixé à l'électrode (120), l'élément de déclenchement de contact à ressort (128) et au moins une partie de l'électrode (120) étant disposés de façon non amovible à l'intérieur de la chambre sensiblement creuse du corps de cartouche remplaçable (100), l'élément à ressort (128) appliquant une force de séparation qui rappelle l'électrode (120) vers la deuxième section (112B) du corps de cartouche remplaçable (100) dans une direction le long d'un axe de l'élément de déclenchement de contact à ressort (128), la force de séparation ayant une amplitude qui est inférieure à une amplitude de la force de couplage,
l'élément de déclenchement de contact à ressort (128) étant directement intégré dans la cartouche et étant conçu pour ne pas être séparable ou désassemblable de la cartouche.

2. Cartouche remplaçable de la revendication 1 dans laquelle une entrée de gaz est prévue pour déplacer l'électrode (120) et surmonter la force de séparation.

3. Cartouche remplaçable de la revendication 1 dans laquelle une base de l'élément de rétrécissement d'arc (124) est anodisée.

4. Cartouche remplaçable de la revendication 1, la cartouche ayant une région avec une conductivité thermique entre environ 200 et 400 watts par mètre par degré Kelvin, le blindage ayant éventuellement un rapport entre capacité calorifique et courant de 2-4/m-°K-A.

5. Cartouche remplaçable de la revendication 1 comprenant en outre un bouchon rapporté relié à la deuxième section (112B) du corps de cartouche (100), le bouchon rapporté orientant sensiblement l'électrode (120) et retenant l'électrode (120) à l'intérieur du corps de cartouche (100).
